# EUROPÄISCHE PATENTSCHRIFT

(11) **EP 3 513 098 B1**
(45) Veröffentlichungstag und Bekanntmachung des Hinweises auf die Patenterteilung: **11.11.2020**
(21) Anmeldenummer: 17762125.7
(22) Anmeldetag: 07.09.2017
(51) Int. Cl.: F16H 47/07, B61C 9/18

(54) **HYDRODYNAMISCHES GETRIEBE FÜR SCHIENENFAHRZEUGE**
HYDRODYNAMIC TRANSMISSION FOR RAIL VEHICLES
TRANSMISSION HYDRODYNAMIQUE POUR VÉHICULES FERROVIAIRES

(30) Priorität: 13.09.2016 DE 102016217408
(43) Veröffentlichungstag der Anmeldung: 24.07.2019
(73) Patentinhaber: Voith Patent GmbH, 89522 Heidenheim (DE)
(72) Erfinder: SCHIEDER, Achim Paul, 89447 Zöschingen (DE); FRENZ, Hartmut, 73079 Süßen (DE); HEYDEL, Stefan, 89520 Heidenheim (DE); RUOFF, Joachim, 89542 Herbrechtingen (DE)
(74) Vertreter: Voith Patent GmbH - Patentabteilung
(86) Internationale Anmeldenummer: PCT/EP2017/072455
(87) Internationale Veröffentlichungsnummer: WO 2018/050533

(56) Entgegenhaltungen:
- DD-A- 46 766
- DE-B- 1 284 801
- DE-B3-102008 011 386
- FR-A- 1 389 378
- US-A- 3 163 126
- US-A- 3 491 619

## Beschreibung

Die Erfindung betrifft eine Getriebeanordnung zum Übertragen von Antriebsleistung für ein Schienenfahrzeug mit einer Primärwelle, einer mechanische Getriebestufe, über die Antriebsleistung eingebracht werden kann, einem ersten hydrodynamischen Kreislauf, einem zweiten hydrodynamischen Kreislauf, einer Abtriebswelle und einem Getriebegehäuse, wobei in Axialrichtung (x) betrachtet hintereinander ein Zahnrad der mechanischen Getriebestufe, ein beschaufeltes Primärrad des ersten Kreislaufes und ein beschaufeltes Primärrad des zweiten Kreislaufes jeweils drehfest auf der Primärwelle befestigt sind, und dass ein beschaufeltes Sekundärrad des ersten Kreislaufes und ein beschaufeltes Sekundärrad des zweiten Kreislaufes miteinander und mit der Abtriebswelle drehfest verbunden sind. Die Antriebsleistung wird von der Primärwelle über die hydrodynamischen Kreisläufe auf die Abtriebswelle übertragen. Getriebeanordnungen mit hydrodynamischen Kreisläufen werden auch Turbogetriebe genannt.

Ein solches Turbogetriebe ist beispielsweise aus DE 102008011386 bekannt. Die dafür notwendige Lagerung sowie die zuverlässige Schmierung und die langlebige Abdichtung sind hierbei sehr aufwändig und kompliziert.

Weiterhin ist aus dem Stand der Technik ein Turbogetriebe gemäß DD 46766 bekannt.

Die Aufgabe der Erfindung ist es nun, eine entsprechende Getriebeanordnung so weiterzuentwickeln, dass die Anordnung noch kompakter wird, beziehungsweise dass Lagerung, Schmierung und Abdichtung einfacher und robuster werden.

Die Aufgabe für die Vorrichtung wird erfindungsgemäß durch eine Getriebeanordnung gemäß Anspruch 1 gelöst. Weitere vorteilhafte Merkmale der erfindungsgemäßen Ausführung, die die Vorrichtung weiter verbessern, finden sich in den Unteransprüchen. Die erfindungsgemäße Getriebeanordnung zeichnet sich dadurch aus, dass die Primärwelle über wenigstens drei Lagerstellen im Gehäuse gelagert ist. Und zwar derart ausgeführt, dass in Axialrichtung x betrachtet eine erste Lagerstelle vor dem Zahnrad, eine zweite Lagerstelle zwischen dem Zahnrad und dem Primärrad des ersten Kreislaufs und eine dritte Lagerstelle hinter dem Primärrad des zweiten Kreislaufs angeordnet ist, wobei die dritte Lagerstelle als Welle-in-Welle-Lagerung mit einem ersten Lager radial zwischen Primärwelle und Abtriebswelle und einem Abtriebslager radial zwischen Abtriebswelle und Gehäuse ausgebildet ist. Radial zwischen ist so gemeint, dass das jeweilige Lager in Radialrichtung betrachtet also senkrecht zur Axialrichtung x zwischen der Primärwelle und der Abtriebswelle beziehungsweise zwischen der Abtriebswelle und dem Gehäuse angeordnet ist, um diese jeweils gegeneinander abzustützen. Dazu hat die Abtriebswelle zumindest in ihrem Endbereich eine entsprechende stirnseitige Vertiefung, um das erste Lager im Inneren der Abtriebswelle aufnehmen zu können. Insbesondere ist es von Vorteil, wenn die Abtriebswelle ganz oder teilweise als Hohlwelle ausgeführt ist.

Durch die erfindungsgemäße Lösung ist die Getriebeanordnung insgesamt so ausgeführt, dass keine der Lagerstellen, welche drehende Teile am Gehäuse abstützen, in Axialrichtung betrachtet zwischen den beiden Kreisläufen vorhanden ist. Im Bereich zwischen den beiden Kreisläufen ist somit nur eine Dichtung zwischen den Sekundärrädern und dem Gehäuse nötig und das Gehäuse muss in diesem Bereich nicht so aufwändig wie bei einer Lagerung bearbeitet werden. Das vereinfacht die gesamte Abdichtung und ermöglicht eine einfachere Schmierölversorgung. Die Sekundärräder können über eine zusätzliche Lagerung auf der Primärwelle abgestützt sein. Darüber hinaus bietet die erfindungsgemäße Lösung einen großen Vorteil für die Montage und sie macht die Anordnung besonders kompakt.

Als hydrodynamischer Kreislauf wird eine Getriebekomponente bezeichnet, die durch Ausbildung einer Kreislaufströmung in einem mit Arbeitsmedium befüllbaren Arbeitsraum Drehmoment von einem beschaufelten Primärrad auf ein beschaufeltes Sekundärrad übertragen kann. Der Arbeitsraum wird zwischen Primärrad und Sekundärrad gebildet. Die Getriebekomponente kann beispielsweise eine hydrodynamische Kupplung oder ein hydrodynamischer Retarder oder ein hydrodynamischer Wandler sein. Das Arbeitsmedium ist insbesondere Öl. Beim hydrodynamischen Wandler wird das Primärrad als Pumpenrad und das Sekundärrad als Turbinenrad bezeichnet. Zusätzlich ist hier auch noch ein Leitschaufelkranz vorhanden.

Unter einer drehfesten Verbindung ist zu verstehen, dass die auf der Welle montierten Räder bei einer Rotationsbewegung der Welle entsprechend mit gleicher Drehzahl mitrotieren.

Bevorzugt ist der erste hydrodynamische Kreislauf als Wandler mit Pumpenrad, Turbinenrad und Leitschaufelkranz und der zweite hydrodynamische Kreislauf als Kupplung ausgebildet, wobei das Sekundärrad des Wandlers direkt drehfest mit dem Sekundärrad der Kupplung verbunden ist. Mit direkt verbunden ist in diesem Zusammenhang gemeint, dass kein anderes Rad einer Getriebestufe oder eines noch weiteren hydrodynamischen Kreislaufes in Axialrichtung x betrachtet dazwischen angeordnet ist. Über das Zahnrad auf der Primärwelle wird die Antriebsleistung eingebracht und über die hydrodynamische Kupplung und/oder über den hydrodynamischen Wandler auf die Abtriebswelle übertragen. Je nach Anforderung im entsprechenden Betriebszustand können Kupplung und Wandler entsprechend mit Arbeitsmedium gefüllt werden, um die gewünschte Übertragungscharakteristik zu erreichen. Die erfindungsgemäße Kombination von Wandler und Kupplung bietet dabei besondere Vorteile für die Steuerung der Übertragungscharakteristik.

Weiterhin ist es von Vorteil, wenn die mechanische Getriebestufe eine Eingangswelle mit einem weiteren Zahnrad umfasst, und so ausgebildet ist, dass sie die Drehzahl von dem weiteren Zahnrad zum Zahnrad auf der Primärwelle erhöht, und insbesondere wenn sie als Stirnradstufe ausgebildet ist. Dadurch können die Drehzahlen der hydrodynamischen Kreisläufe, insbesondere bei Antrieb durch einen Verbrennungsmotor, in einen optimalen Bereich für die Funktion gebracht werden. Die hydrodynamische Drehmomentübertragung ist bei hohen Drehzahlen, insbesondere zwischen 3000 und 6000 U/min, besonders effizient. Zudem ist diese Version besonders platzsparend zu realisieren.

In einer vorteilhaften Ausführung ist auf der Abtriebsseite eine weitere mechanische Getriebestufe vorhanden und ein Zahnrad dieser weiteren Getriebestufe ist drehfest mit der Abtriebswelle verbunden. Wobei die dritte Lagerstelle in Axialrichtung x betrachtet zwischen dem Primärrad des zweiten Kreislaufes und dem Zahnrad der weiteren Getriebestufe angeordnet ist. Bevorzugt ist die weitere mechanische Getriebestufe so ausgeführt, dass die Drehzahl von der Abtriebswelle ausgehend reduziert wird. So kann die Drehzahl wieder in einen für die Antriebsfunktion gewünschten Bereich gebracht werden.

Vorteilhafterweise ist die erste Lagerstelle als Festlager, insbesondere als Kombination aus Zylinderrollenlager und Vierpunktlager, die zweite Lagerstelle als Loslager, insbesondere als Zylinderrollenlager, und die dritte Lagerstelle als Loslager, insbesondere als Kombination aus Zylinderrollenlager und Kugellager, ausgebildet sind. Unter Lagerstelle wird nicht unbedingt nur ein einzelnes Wälzlager verstanden, sondern eine Position, an der die Welle gelagert ist. Das kann durchaus auch durch mehrere Wälzlager in räumlicher Nähe ausgeführt sein.

Besonders bevorzugt ist die Anordnung so ausgeführt, dass der Abstand in Axialrichtung x zwischen dem Abtriebslager und dem ersten Lager der dritten Lagerstelle kleiner ist als der Bohrungsdurchmesser des Abtriebslagers. Dadurch ist gewährleistet, dass die dritte Lagerstelle für eine ausreichende Stabilität der Welle-in-Welle-Lagerung sorgt.

Um eine einfache Ölversorgung der Lager zu ermöglichen, weist die Primärwelle bevorzugt eine durchgehende Längsbohrung zur Ölversorgung auf. Zudem ist so eine einfache Fertigung möglich. Zusätzlich ist es von Vorteil, wenn die Abtriebswelle eine Wand oder eine Scheibe aufweist, die den Innenquerschnitt öldicht verschließt. Bevorzugt ist die Wand oder die Scheibe so in der Abtriebswelle vorgesehen, dass sie im montierten Zustand nahe zum abtriebsseitigen Ende der Primärwelle angeordnet ist. Somit kann das erste Lager der dritten Lagerstelle mit Schmieröl aus der Längsbohrung der Primärwelle versorgt werden. Das ermöglicht eine einfache und zuverlässige Schmierung. Ebenfalls vorteilhaft ist es, wenn das abtriebsseitige Ende der Primärwelle in Axialrichtung x nicht über das Abtriebslager der dritten Lagerstelle hinausragt. Dadurch ist eine besonders kompakte Ausführung und eine gute Schmierölversorgung möglich.

Weiterhin erfindungsgemäß ist ein Zwischenlager vorhanden, das das Sekundärrad des ersten Kreislaufes auf der Primärwelle abstützt. Da das Sekundärrad des zweiten Kreislaufes mit dem Sekundärrad des ersten Kreislaufes verbunden ist, ist somit die Sekundärseite insgesamt auf der Primärwelle abgestützt. Zusätzlich kann die Primärwelle eine durchgehende Längsbohrung zur Ölversorgung aufweisen und eine Schmierölbohrung vorhanden sein, die die Längsbohrung mit dem Zwischenraum zwischen Primärwelle und Sekundärrad des ersten Kreislaufes so verbindet, dass das Zwischenlager mit Schmieröl versorgt werden kann. Das bietet wiederum eine zuverlässige Schmierölversorgung und ist einfach zu fertigen.

In einer weiteren bevorzugten Ausführung weist die Primärwelle eine durchgehende Längsbohrung zur Ölversorgung auf und das Primärrad des ersten Kreislaufs ist über einen Kegelpressverband auf der Primärwelle befestigt. Zusätzlich ist eine Pressölbohrung vorhanden, die in Verbindung mit der Längsbohrung steht und geeignet ist, Öl zum Lösen des Kegelpressverband unter das Primärrad zu leiten. So kann die Längsbohrung sowohl zur Schmierölversorgung als auch zur Versorgung mit Drucköl für die Montage oder Demontage des Kegelpressverbandes genutzt werden. Insbesondere können an dieser Längsbohrung zwei Gewinde derart vorhanden sein, dass die Längsbohrung auf einer Seite verschlossen und auf der anderen Seite mit einer Druckölleitung verbunden werden kann. So kann ausreichend Druck in der Pressölbohrung und unter dem Kegelpressverband erzeugt werden.

Um vorhandene Schmierölbohrungen nicht extra verschließen zu müssen, kann eines der Gewinde soweit im Inneren der Längsbohrung angeordnet sein, dass die Schmierölbohrung nicht zwischen den beiden Gewinden liegt.

Anhand von Ausführungsbeispielen werden weitere vorteilhafte Ausprägungen der Erfindung erläutert unter Bezugnahme auf die Zeichnungen. Die genannten Merkmale können nicht nur in der dargestellten Kombination vorteilhaft umgesetzt werden, sondern auch einzeln untereinander kombiniert werden. Die Figuren zeigen im Einzelnen:
- **Fig.1**: Schematische Darstellung einer erfindungsgemäßen Getriebeanordnung
- **Fig.2**: Schematische Ansicht einer Primärwelle im Schnitt mit darauf montierten Zahnrädern und Primärädern und mit Lagerstellen

Nachfolgend werden die Figuren detaillierter beschrieben. Gleiche Bezugszahlen bezeichnen gleiche beziehungsweise analoge Bauteile oder Komponenten.

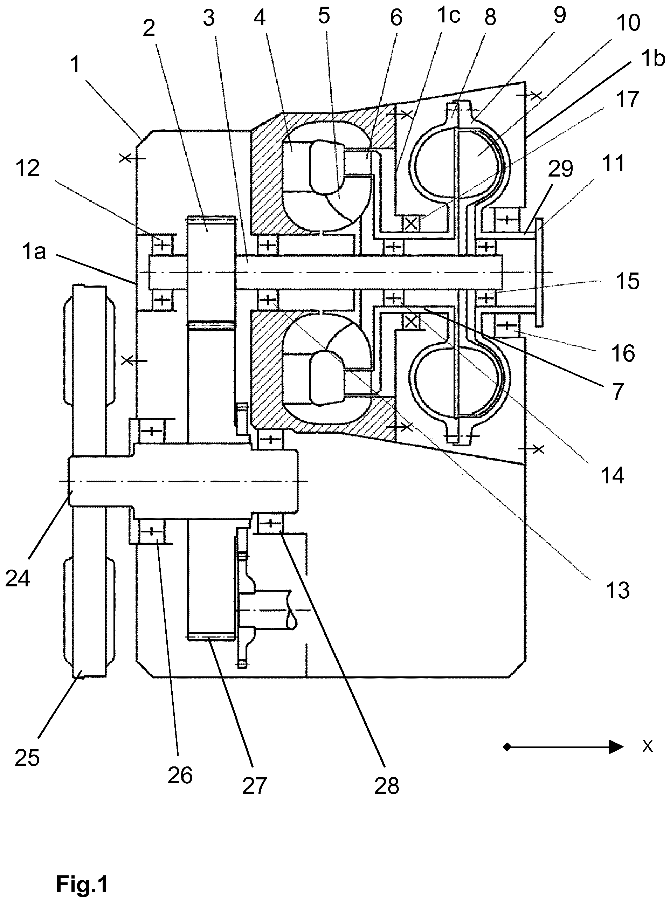

In **Fig.1** ist eine erfindungsgemäße Getriebeanordnung zum Übertragen von Antriebsleistung dargestellt. Über die Antriebskupplung 25 wird die Antriebsleistung zum Beispiel von einem Motor auf die Eingangswelle 24 eingebracht. Die Antriebswelle 24 ist mit den Lagern 26 und 28 im Gehäuse 1 gelagert. Über eine mechanische Getriebestufe, die in diesem Ausführungsbeispiel als Stirnradstufe aus zwei Zahnrädern 27 und 2 gebildet wird, wird die Antriebsleistung auf die Primärwelle 3 übertragen. Insbesondere wenn als Antrieb ein Verbrennungsmotor verwendet wird, ist es vorteilhaft, wenn diese Getriebestufe als Hochgang ausgeführt ist, das heißt, dass die Drehzahl erhöht wird. Dadurch kann die Drehzahl der Primärwelle in den für die hydraulischen Kreisläufe effizienten Bereich gebracht werden, der bei höheren Drehzahlen (3000- 6000 U/min) liegt.

Neben dem Zahnrad 2 sind noch das Primärrad 5 des ersten hydrodynamischen Kreislaufes und das Primärrad 10 des zweiten hydrodynamischen Kreislaufes drehfest auf der Primärwelle 3 montiert. In Axialrichtung x betrachtet ist das Primärrad 5 des ersten Kreislaufes zwischen dem Zahnrad 2 und dem Primärrad 10 des zweiten Kreislaufes angeordnet. Weiterhin sind das Sekundärrad 6 des ersten Kreislaufes und das Sekundärrad 8 des zweiten Kreislaufes drehfest miteinander verbunden. Insbesondere gibt es keinen weiteren hydrodynamischen Kreislauf zwischen dem ersten und dem zweiten Kreislauf. Durch diese Anordnung ist eine besonders kompakte Ausführung des Getriebes möglich.

Der erste hydrodynamische Kreislauf ist als Wandler mit einem Pumpenrad als Primärrad 5, einem Turbinenrad als Sekundärrad 6 und einem Leitschaufelkranz 4 ausgeführt. Der zweite hydrodynamische Kreislauf ist als Kupplung mit Primärrad 10 und Sekundärrad 8 ausgeführt. Durch unterschiedliche Befüllung der beiden Kreisläufe mit Öl als Arbeitsmittel kann die Charakteristik der Leistungsübertragung im Turbogetriebe gezielt gesteuert und so an den gewünschten Betriebszustand angepasst werden.

Die Primärwelle ist erfindungsgemäß über drei Lagerstellen im Getriebegehäuse gelagert. Das Getriebegehäuse insgesamt umfasst das Gehäuse 1 und die Gehäusedeckel 1a und 1b, sowie die Zwischenwand 1c. Die erste Lagerstelle 12 ist vor dem Zahnrad 2, die zweite Lagerstelle 13 ist zwischen dem Zahnrad 2 und dem Primärrad 5 und die dritte Lagerstelle bestehend aus dem ersten Lager 15 und dem Abtriebslager 16 ist hinter dem Primärrad 10 angeordnet. Jeweils betrachtet in Axialrichtung x und bezogen auf die Flanschposition der jeweiligen Räder. Durch diese besondere Art der Lageranordnung wird vermieden, dass ein Lager zur Lagerung im Gehäuse zwischen den beiden Kreisläufen notwendig ist. Das heißt es gibt kein Lager, das die Primärwelle 3 an der Zwischenwand 1c abstützen muss. Dadurch kann die Zwischenwand einfacher gefertigt werden und die Montage vereinfacht sich deutlich. Das sind weitere wesentliche Vorteile für das Getriebe. Zur Zwischenwand 1c ist nur eine Dichtung 17 notwendig. Zwischen den Kreisläufen ist das Zwischenlager 14 vorhanden, das die Sekundärräder 6 und 8 auf der Primärwelle 3 abstützt. Diese Zwischenlager 14 hat aber keine Abstützwirkung zum Gehäuse hin. Die Sekundärräder 6 und 8 sind über die Kupplungsschale 9 mit der Abtriebswelle 29 zu einer gemeinsam rotierenden Einheit verbunden. So dass die Antriebsleistung über einen oder beide hydrodynamischen Kreisläufe von der Primärwelle 3 auf die Abtriebswelle 29 übertragen werden kann. Nicht dargestellt ist eine weitere mechanische Getriebestufe, die an oder auf der Abtriebswelle 29 befestigt ist. Bevorzugt ist diese weitere mechanische Getriebestufe so gestaltet, dass die Drehzahl wieder reduziert wird auf ein für den Antrieb gewünschtes Niveau.

Die dritte Lagerstelle ist als sogenannte Welle-in-Welle-Lagerung ausgeführt. Die Abstützung zum Getriebegehäuse hin erfolgt über das erste Lager 15, das die Primärwelle 3 in der Abtriebswelle 29 lagert, und über das Abtriebslager 16, das die Abtriebswelle 29 im Gehäuse, hier im Gehäusedeckel 1b, lagert. Auch das trägt dazu bei, dass die Getriebeanordnung besonders kompakt gestaltet werden kann.

In der dargestellten Ausführung ist die Abtriebswelle 29 als Hohlwelle ausgeführt. Das vereinfacht die Herstellung und reduziert das Gewicht der Welle. Zudem ist die Montage des Lagers 15 einfacher.

Bevorzugt sind die Lagerstellen als Wälzlager ausgeführt. Die erste Lagerstelle 12 ist bevorzugt ein Festlager, während die zweite Lagerstelle 13 und die dritte Lagerstelle 15+16 als Loslager gestaltet sind. Das Festlager der ersten Lagerstelle 12 kann insbesondere durch eine Kombination aus einem Zylinderrollenlager und einem Vierpunktlager gebildet werden. Das Loslager der zweiten Lagerstelle 13 ist bevorzugt als Zylinderrollenlager ausgeführt. Das erste Lager 15 der dritten Lagerstelle ist bevorzugt ebenfalls ein Zylinderrollenlager und das Abtriebslager 16 ist bevorzugt ein Kugelrollenlager. Das Zwischenlager 14 ist wiederum bevorzugt als Zylinderrollenlager ausgeführt. Insgesamt tragen diese Ausführungen zu einer vereinfachten Montierbarkeit bei.

Die Abtriebswelle 29 ist mit einer Dichtscheibe 11 in ihrem Querschnitt öldicht verschlossen, so dass das Schmieröl vom ersten Lager 15 im Getriebeinneren bleibt. Die Dichtscheibe 11 ist in diesem Ausführungsbeispiel als Flansch dargestellt. Sie könnte aber genauso gut auch im Inneren der als Hohlwelle ausgeführten Abtriebswelle 29 positioniert sein. Die Anbindung nachfolgender Komponenten an der Abtriebswelle 29 könnte beispielsweise auch über eine Verzahnung am Innenumfang oder Außenumfang oder über eine andere Kupplung erfolgen.

Die Primärwelle 3 ist abtriebsseitig so kurz ausgeführt, dass ihr Ende nicht über das Abtriebslager 16 in Axialrichtung x hinausragt und genügend Platz für den Umlauf des Schmieröls verbleibt. Nicht dargestellt ist eine bevorzugt vorhandene durchgehende Längsbohrung in der Primärwelle 3, über die Schmieröl von der Antriebsseite beim Gehäusedeckel 1a aus ins Getriebe und bis zum Lager 15 eingebracht werden kann. Die Lagerstellen 12 und 13 können über das umlaufende Öl der mechanischen Getriebestufe am Zahnrad 2 geschmiert werden. Das Zwischenlager 14 kann über eine Radialbohrung in der Primärwelle 3, die eine Ölversorgung aus der Längsbohrung ermöglicht, geschmiert werden. Durch die erfindungsgemäße Lageranordnung ist eine einfache und zuverlässige Schmierölversorgung aller Lagerstelle möglich.

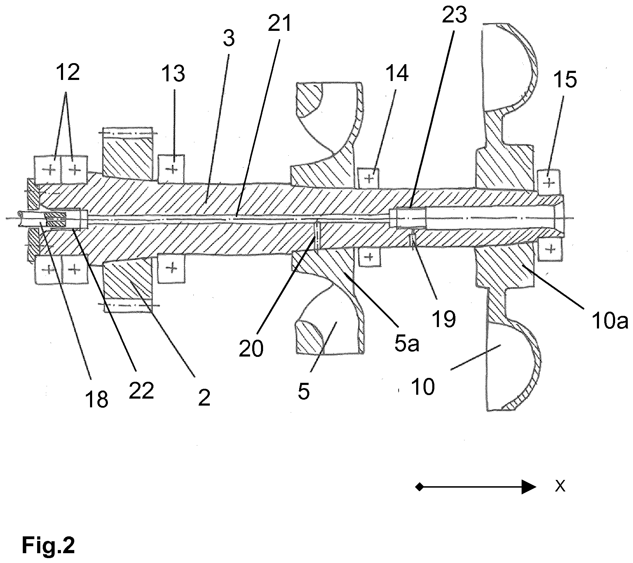

**Fig.2** zeigt die Primärwelle 3 einer erfindungsgemäßen Getriebeanordnung im Schnitt und mit den auf ihr befestigten Rädern und Lagern. In Axialrichtung x betrachtet sind von links nach rechts erst das Zahnrad 2, dann das Primärrad 5 des ersten Kreislaufes und danach das Primärrad 10 des zweiten Kreislaufes auf der Primärwelle 3 befestigt. Alle drei Räder sind über Kegelpressverbände montiert. Die beiden Primärräder 5 und 10 sind so ausgeführt, dass sie über Pressölbohrung mit Drucköl beaufschlagt werden können, die eine Montage und Demontage der Kegelpressverbindung ermöglichen. Während die Pressölbohrung beim Primärrad 10 im Flanschbereich 10a vorhanden ist (nicht dargestellt), ist die Pressölbohrung 20 für das Primärrad 5 in der Primärwelle 3 vorgesehen, da der Flanschbereich 5a nicht dick genug dafür wäre. Die Pressölbohrung 20 ist eine Radialbohrung, die Verbindung zur durchgehenden Längsbohrung 21 hat.

Die Längsbohrung hat zwei verschiedene Aufgaben. Im Betrieb wird über die Schmieröldüse 18 Öl eingebracht und über die Längsbohrung 21 unter anderem zum Lager 15 geführt. Die nicht dargestellte Dichtscheibe in der Abtriebswelle begrenzt den Schmierölbereich zur Abtriebsseite hin. Über die radiale Schmierölbohrung 19 wird das Zwischenlager 14 versorgt. Für die Montage oder Demontage wird am Gewinde 22 in der Längsbohrung 21 eine Druckölversorgung angeschlossen. Ins Gewinde 23 wird ein Verschlussstopfen eingeschraubt. Das Gewinde ist so tief in der Längsbohrung 21 angeordnet, dass die Schmierölbohrung 19 bei eingeschraubtem Verschlussstopfen von der Druckölversorgung abgetrennt ist. So kann gezielt die Pressölbohrung 20 mit Drucköl versorgt werden zur Montage oder Demontage des Primärrades 5.

Weiterhin ist zu sehen, dass die erste Lagerstelle durch eine Kombination von zwei Wälzlagern 12 ausgeführt ist. Bevorzugt wird eine Kombination eines Zylinderrollenlagers mit einem Vierpunktlager verwendet.

### Bezugszeichenliste

- 1: Gehäuse
- 1a, 1b: Gehäusedeckel
- 1c: Zwischenwand
- 2: Zahnrad
- 3: Primärwelle
- 4: Leitrad
- 5: Primärrad des ersten Kreislaufs
- 5a: Flansch Primärrad
- 6: Sekundärrad des ersten Kreislaufs
- 7: Hohlwelle
- 8: Sekundärrad des zweiten Kreislaufs
- 9: Kupplungsschale
- 10: Primärrad des zweiten Kreislaufs
- 10a: Flansch Primärrad
- 11: Dichtscheibe
- 12: erste Lagerstelle
- 13: zweite Lagerstelle
- 14: Zwischenlager
- 15: erstes Lager der dritte Lagerstelle
- 16: Abtriebslager
- 17: Dichtung
- 18: Schmieröldüse
- 19: Schmierölbohrung
- 20: Pressölbohrung
- 21: Längsbohrung
- 22, 23: Gewinde
- 24: Eingangswelle
- 25: Antriebskupplung
- 27: weiteres Zahnrad
- 26, 28: Lager
- 29: Abtriebswelle x Axialrichtung

## Patentansprüche

1. Getriebeanordnung zum Übertragen von Antriebsleistung für ein Schienenfahrzeug, aufweisend
eine Primärwelle (3), eine mechanische Getriebestufe, über die Antriebsleistung eingebracht werden kann, einen ersten hydrodynamischen Kreislauf (4+5+6), einen zweiten hydrodynamischen Kreislauf (8+10), eine Abtriebswelle (29), und ein Getriebegehäuse (1+1a+1 b+1 c),
wobei in Axialrichtung (x) betrachtet hintereinander ein Zahnrad (2) der mechanischen Getriebestufe, ein beschaufeltes Primärrad (5) des ersten Kreislaufes und ein beschaufeltes Primärrad (10) des zweiten Kreislaufes jeweils drehfest auf der Primärwelle (3) befestigt sind, und wobei ein beschaufeltes Sekundärrad (6) des ersten Kreislaufes und ein beschaufeltes Sekundärrad (8) des zweiten Kreislaufes miteinander und mit der Abtriebswelle drehfest verbunden sind, wobei die Primärwelle (3) über wenigstens drei Lagerstellen (12,13,15+16) im Gehäuse (1+1a+1b+1c) derart gelagert ist, dass in Axialrichtung (x) betrachtet eine erste Lagerstelle (12) vor dem Zahnrad (2), eine zweite Lagerstelle (13) zwischen dem Zahnrad (2) und dem Primärrad (5) des ersten Kreislaufs und eine dritte Lagerstelle (15+16) hinter dem Primärrad (10) des zweiten Kreislaufs angeordnet ist, und wobei die dritte Lagerstelle als Welle-in-Welle-Lagerung mit einem ersten Lager (15) radial zwischen Primärwelle (3) und Abtriebswelle (29) und einem Abtriebslager (16) radial zwischen Abtriebswelle (29) und Gehäuse (1+1a+1b+1c) ausgebildet ist,
**dadurch gekennzeichnet,**
**dass** ein Zwischenlager (14) vorhanden ist, das das Sekundärrad (6) des ersten Kreislaufes auf der Primärwelle (3) abstützt.

2. Getriebeanordnung nach Anspruch 1
**dadurch gekennzeichnet,**
**dass** der erste hydrodynamische Kreislauf als Wandler (4+5+6) und der zweite hydrodynamische Kreislauf als Kupplung (8+10) ausgebildet sind, wobei das Sekundärrad (6) des Wandlers direkt drehfest mit dem Sekundärrad der Kupplung (8) verbunden ist.

3. Getriebeanordnung nach Anspruch 1 oder 2
**dadurch gekennzeichnet,**
**dass** die mechanische Getriebestufe eine Eingangswelle (24) mit einem weiteren Zahnrad (26) umfasst, und so ausgebildet ist, dass sie die Drehzahl von dem weiteren Zahnrad (26) zum Zahnrad (2) auf der Primärwelle (3) erhöht, und insbesondere als Stirnradstufe ausgebildet ist.

4. Getriebeanordnung nach einem der vorherigen Ansprüche
**dadurch gekennzeichnet,**
**dass** eine weitere mechanische Getriebestufe vorhanden ist und ein Zahnrad dieser weiteren Getriebestufe drehfest mit der Abtriebswelle (29) verbunden ist, wobei die dritte Lagerstelle (15+16) in Axialrichtung (x) betrachtet zwischen dem Primärrad (10) des zweiten Kreislaufes und dem Zahnrad der weiteren Getriebestufe angeordnet ist.

5. Getriebeanordnung nach einem der vorherigen Ansprüche
**dadurch gekennzeichnet,**
**dass** die erste Lagerstelle (12) als Festlager, insbesondere als Kombination aus Zylinderrollenlager und Vierpunktlager, die zweite Lagerstelle (13) als Loslager, insbesondere als Zylinderrollenlager, und die dritte Lagerstelle (15+16) als Loslager, insbesondere als Kombination aus Zylinderrollenlager (15) und Kugellager (16), ausgebildet sind.

6. Getriebeanordnung nach einem der vorherigen Ansprüche
**dadurch gekennzeichnet,**
**dass** der Abstand in Axialrichtung (x) zwischen dem Abtriebslager (16) und dem ersten Lager (15) kleiner ist als der Bohrungsdurchmesser des Abtriebslagers (16).

7. Getriebeanordnung nach einem der vorherigen Ansprüche
**dadurch gekennzeichnet,**
**dass** die Primärwelle (3) eine durchgehende Längsbohrung (21) zur Ölversorgung aufweist.

8. Getriebeanordnung nach Anspruch 7
**dadurch gekennzeichnet,**
**dass** die Abtriebswelle (3) eine Wand oder eine Scheibe aufweist, die den Innenquerschnitt öldicht verschließt und bevorzugt nahe zum abtriebsseitigen Ende der Primärwelle (3) angeordnet ist und bevorzugt so, dass das Lager (15) der dritten Lagerstelle mit Schmieröl aus der Längsbohrung (21) versorgt werden kann.

9. Getriebeanordnung nach einem der vorherigen Ansprüche
**dadurch gekennzeichnet,**
**dass** das abtriebsseitige Ende der Primärwelle (3) in Axialrichtung (x) nicht über das Abtriebslager (16) der dritten Lagerstelle hinausragt.

10. Getriebeanordnung nach Anspruch 9
**dadurch gekennzeichnet,**
**dass** die Primärwelle (3) eine durchgehende Längsbohrung (21) zur Ölversorgung aufweist und eine Schmierölbohrung (19) vorhanden ist, die die Längsbohrung (21) mit dem Zwischenraum zwischen Primärwelle (3) und Sekundärrad (6) des ersten Kreislaufes so verbindet, dass das Zwischenlager (14) mit Schmieröl versorgt werden kann.

11. Vorrichtung nach einem der vorherigen Ansprüche
**dadurch gekennzeichnet,**
**dass** die Primärwelle (3) eine durchgehende Längsbohrung (21) zur Ölversorgung aufweist, dass das Primärrad (5) des ersten Kreislaufs über einen Kegelpressverband auf der Primärwelle (3) befestigt ist und dass eine Pressölbohrung (20) vorhanden ist, die in Verbindung mit der Längsbohrung (21) steht und geeignet ist, Öl zum Lösen des Kegelpressverband unter das Primärrad (5) zu leiten.

12. Getriebeanordnung nach Anspruch 11
**dadurch gekennzeichnet,**
**dass** an der Längsbohrung (21) zwei Gewinde (22,23) derart vorhanden sind, dass die Längsbohrung (21) auf einer Seite mit einem Stopfen verschlossen und auf der anderen Seite mit einer Druckölleitung verbunden werden kann.

13. Getriebeanordnung nach den Ansprüche 10 und 12
**dadurch gekennzeichnet,**
**dass** eines der Gewinde (23) soweit im Inneren der Längsbohrung angeordnet ist, dass die Schmierölbohrung (19) nicht zwischen den beiden Gewinden (22,23) liegt.

14. Getriebeanordnung nach einem der vorherigen Ansprüche
**dadurch gekennzeichnet,**
**dass** die Abtriebswelle (29) ganz oder teilweise als Hohlwelle ausgeführt ist.

## Claims

1. Gear assembly for transmitting motive power for a rail vehicle, having
a primary shaft (3), a mechanical gear stage by way of which the motive power can be introduced, a first hydrodynamic circuit (4+5+6), a second hydrodynamic circuit (8+10), an output shaft (29), and a gearbox housing (1+1a+1b+1c);
wherein, when viewed in the axial direction (x), a gear wheel (2) of the mechanical gear stage, a bladed primary wheel (5) of the first circuit, and a bladed primary wheel (10) of the second circuit are in each case fastened in succession so as to be rotatably fixed on the primary shaft (3), and wherein a bladed secondary wheel (6) of the first circuit and a bladed secondary wheel (8) of the second circuit are connected in a rotationally fixed manner to one another and to the output shaft, wherein the primary shaft (3) by way of at least three bearing points (12, 13, 15+16) is mounted in the housing (1+1a+1b+1c) in such a manner that, when viewed in the axial direction (x), a first bearing point (12) is disposed in front of the gear wheel (2), a second bearing point (13) is disposed between the gear wheel (2) and the primary wheel (5) of the first circuit, and a third bearing point (15+16) is disposed behind the primary wheel (10) of the second circuit, and wherein the third bearing point is configured as a shaft-in-shaft mounting having, so as to be radially between the primary shaft (3) and the output shaft (29), a first bearing (15) and, so as to be radially between the output shaft (29) and the housing (1+1a+1b+1c), an output bearing (16),
**characterized in that**
an intermediate bearing (14) which supports the secondary wheel (6) of the first circuit on the primary shaft (3) is present.

2. Gear assembly according to Claim 1,
**characterized in that**
the first hydrodynamic circuit is configured as a converter (4+5+6), and the second hydrodynamic circuit is configured as a clutch (8+10), wherein the secondary wheel (6) of the converter is connected in a rotationally fixed manner to the secondary wheel of the clutch (8).

3. Gear assembly according to Claim 1 or 2,
**characterized in that**
the mechanical gear stage comprises an input shaft (24) having a further gear wheel (26) and is configured such that said mechanical gear stage increases the rotating speed from the further gear wheel (26) to the gear wheel (2) on the primary shaft (3) and is in particular configured as a spur gear stage.

4. Gear assembly according to one of the preceding claims,
**characterized in that**
a further mechanical gear stage is present, and one gear wheel of this further gear stage is connected in a rotationally fixed manner to the output shaft (29), wherein the third bearing point (15+16), when viewed in the axial direction (x), is disposed between the primary wheel (10) of the second circuit and the gear wheel of the further gear stage.

5. Gear assembly according to one of the preceding claims,
**characterized in that**
the first bearing point (12) is configured as a fixed bearing, in particular as a combination of a cylindrical roller bearing and a four-point bearing, the second bearing point (13) is configured as a floating bearing, in particular as a cylindrical roller bearing, and the third bearing point (15+16) is configured as a floating bearing, in particular as a combination of a cylindrical roller bearing (15) and a ball bearing (16).

6. Gear assembly according to one of the preceding claims,
**characterized in that**
the spacing in the axial direction (x) between the output bearing (16) and the first bearing (15) is smaller than the bore diameter of the output bearing (16) .

7. Gear assembly according to one of the preceding claims,
**characterized in that**
the primary shaft (3) has a continuous longitudinal bore (21) for the supply of oil.

8. Gear assembly according to Claim 7,
**characterized in that**
the output shaft (3) has a wall or a disc which in an oil-tight manner closes the internal cross section and is preferably disposed close to the output-proximal end of the primary shaft (3), preferably so that the bearing (15) of the third bearing point can be supplied with lubricating oil from the longitudinal bore (21).

9. Gear assembly according to one of the preceding claims,
**characterized in that**
the output-proximal end of the primary shaft (3) in the axial direction (x) does not protrude beyond the output bearing (16) of the third bearing point.

10. Gear assembly according to Claim 9,
**characterized in that**
the primary shaft (3) has a continuous longitudinal bore (21) for the supply of oil, and a lubricating oil bore (19) is present, said lubricating oil bore (19) connecting the longitudinal bore (21) to the intermediate space between the primary shaft (3) and the secondary wheel (6) of the first circuit such that the intermediate bearing (14) can be supplied with lubricating oil.

11. Device according to one of the preceding claims,
**characterized in that**
the primary shaft (3) has a continuous longitudinal bore (21) for the supply of oil, **in that** the primary wheel (5) of the first circuit by way of a tapered interference fit is fastened on the primary shaft (3), and **in that** an interference-fit oil bore (20) is present, said interference-fit oil bore (20) being connected to the longitudinal bore (21) and being suitable for directing oil for releasing the tapered interference fit under the primary wheel (5) .

12. Gear assembly according to Claim 11,
**characterized in that**
two threads (22, 23) are present on the longitudinal bore (21) in such a manner that the longitudinal bore (21) is closed by a plug on one side and on the other side can be connected to a pressurized oil line.

13. Gear assembly according to Claims 10 and 12,
**characterized in that**
one of the threads (23) is disposed so far in the interior of the longitudinal bore that the lubricating oil bore (19) does not lie between the two threads (22, 23).

14. Gear assembly according to one of the preceding claims,
**characterized in that**
the output shaft (29) is completely or partially embodied as a hollow shaft.

## Revendications

1. Ensemble de transmission destiné à transmettre la puissance d'entraînement d'un véhicule ferroviaire, ledit ensemble comprenant
un arbre primaire (3), un étage de transmission mécanique permettant d'injecter la puissance d'entraînement, un premier circuit hydrodynamique (4+5+6), un deuxième circuit hydrodynamique (8+10), un arbre de sortie (29) et un boîtier de transmission (1+1a+1b+1c) ,
une roue dentée (2) de l'étage mécanique, une roue primaire à aubes (5) du premier circuit et une roue primaire à aubes (10) du deuxième circuit étant chacune fixées solidairement en rotation les unes derrière les autres, par référence à la direction axiale (x), sur l'arbre primaire (3), et une roue secondaire à aubes (6) du premier circuit et une roue secondaire à aubes (8) du deuxième circuit étant reliées l'une à l'autre et à l'arbre de sortie solidairement en rotation, l'arbre primaire (3) étant monté sur paliers par le biais d'au moins trois points de palier (12, 13, 15+16) dans le boîtier (1+1a+1b+1c) de manière à ce qu'un premier point d'appui (12) est disposé devant la roue dentée (2), un deuxième point d'appui (13) est disposé entre la roue dentée (2) et la roue primaire (5) du premier circuit et un troisième point d'appui (15+16) est disposé derrière la roue primaire (10) du deuxième circuit par référence à la direction axiale (x) et le troisième point d'appui étant conçu comme un palier arbre-dans-arbre pourvu d'un premier palier (15) situé radialement entre l'arbre primaire (3) et l'arbre de sortie (29) et d'un palier de sortie (16) situé radialement entre l'arbre de sortie (29) et le boîtier (1+1a+1b+1c) ,
**caractérisé en ce que**
un palier intermédiaire (14) est prévu qui supporte la roue secondaire (6) du premier circuit sur l'arbre primaire (3).

2. Ensemble de transmission selon la revendication 1,
**caractérisé en ce que**
le premier circuit hydrodynamique est conçu comme un convertisseur (4+5+6) et le deuxième circuit hydrodynamique est conçu comme un embrayage (8+10), la roue secondaire (6) du convertisseur étant directement reliée solidairement en rotation à la roue secondaire de l'embrayage (8) .

3. Ensemble de transmission selon la revendication 1 ou 2,
**caractérisé en ce que**
l'étage de transmission mécanique comprend un arbre d'entrée (24) pourvu d'une autre roue dentée (26), et est conçu de façon à augmenter la vitesse de rotation de l'autre roue dentée (26) vers la roue dentée (2) située sur l'arbre primaire (3), et en particulier il est conçu comme un étage à roue droite.

4. Ensemble de transmission selon l'une des revendications précédentes,
**caractérisé en ce que**
un autre étage de transmission mécanique est prévu et une roue dentée de cet autre étage de transmission est reliée solidairement en rotation à l'arbre de sortie (29), le troisième point d'appui (15+16) étant disposé, par référence à la direction axiale (x), entre la roue primaire (10) du deuxième circuit et la roue dentée de l'autre étage de transmission.

5. Ensemble de transmission selon l'une des revendications précédentes,
**caractérisé en ce que**
le premier point d'appui (12) est conçu comme un palier fixe, en particulier une combinaison de palier à rouleaux cylindriques et de palier à quatre points, le deuxième point d'appui (13) est conçu comme un palier libre, en particulier un palier à rouleaux cylindriques, et le troisième point d'appui (15+16) est conçu comme un palier libre, en particulier une combinaison de palier à rouleaux cylindriques (15) et de palier à billes (16).

6. Ensemble de transmission selon l'une des revendications précédentes,
**caractérisé en ce que**
la distance dans la direction axiale (x) entre le palier de sortie (16) et le premier palier (15) est inférieure au diamètre d'alésage du palier de sortie (16) .

7. Ensemble de transmission selon l'une des revendications précédentes,
**caractérisé en ce que**
l'arbre primaire (3) comporte un alésage longitudinal traversant (21) destiné à l'alimentation en huile.

8. Ensemble de transmission selon la revendication 7,
**caractérisé en ce que**
l'arbre de sortie (3) comporte une paroi ou un disque qui ferme la section transversale intérieure de manière étanche à l'huile et qui est de préférence disposé à proximité de l'extrémité côté sortie de l'arbre primaire (3) et de préférence de telle sorte que le palier (15) du troisième point d'appui puisse être alimenté en huile de lubrification à partir de l'alésage longitudinal (21).

9. Ensemble de transmission selon l'une des revendications précédentes,
**caractérisé en ce que**
l'extrémité côté sortie de l'arbre primaire (3) ne fait pas saillie du palier de sortie (16) du troisième point d'appui dans la direction axiale (x).

10. Ensemble de transmission selon la revendication 9,
**caractérisé en ce que**
l'arbre primaire (3) comporte un alésage longitudinal traversant (21) destiné à l'alimentation en huile, et un alésage d'huile de lubrification (19) est prévu qui relie l'alésage longitudinal (21) à l'espace intermédiaire entre l'arbre primaire (3) et la roue secondaire (6) du premier circuit de sorte que le palier intermédiaire (14) puisse être alimenté en huile de lubrification.

11. Dispositif selon l'une des revendications précédentes,
**caractérisé en ce que**
l'arbre primaire (3) comporte un alésage longitudinal traversant (21) destiné à l'alimentation en huile, **en ce que** la roue primaire (5) du premier circuit est fixée à l'arbre primaire (3) par un ajustement serré conique et **en ce qu'**un alésage d'huile sous pression (20) est prévu qui est relié à l'alésage longitudinal (21) et qui est adapté pour diriger l'huile sous la roue primaire (5) pour desserrer l'ajustement serré conique.

12. Ensemble de transmission selon la revendication 11,
**caractérisé en ce que**
deux filetages (22, 23) sont prévus au niveau de l'alésage longitudinal (21) de telle sorte que l'alésage longitudinal (21) puisse, d'un côté, être fermé avec un bouchon et puisse, de l'autre côté, être relié à un conduit d'huile sous pression.

13. Ensemble de transmission selon les revendications 10 et 12,
**caractérisé en ce que**
l'un des filetages (23) est disposé à l'intérieur de l'alésage longitudinal de telle manière que l'alésage d'huile de lubrification (19) ne se trouve pas entre les deux filetages (22, 23).

14. Ensemble de transmission selon l'une des revendications précédentes,
**caractérisé en ce que**
l'arbre de sortie (29) est conçu entièrement ou partiellement comme un arbre creux.
